(19) Europäisches Patentamt

European Patent Office

Office européen des brevets

(11) **EP 1 216 177 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(21) Anmeldenummer: **00966011.9**

(22) Anmeldetag: **14.09.2000**

(51) Int Cl.:
*B60T 8/00* (2006.01)      *G01D 3/02* (2006.01)
*G01B 7/16* (2006.01)

(86) Internationale Anmeldenummer:
**PCT/EP2000/008991**

(87) Internationale Veröffentlichungsnummer:
**WO 2001/019656 (22.03.2001 Gazette 2001/12)**

(54) **REIFENSENSOR**

TIRE SENSOR

DISPOSITIF CAPTEUR DE PNEU

(84) Benannte Vertragsstaaten:
**DE FR GB**

(30) Priorität: **15.09.1999 DE 19944094**
**26.05.2000 DE 10026110**
**07.09.2000 DE 10044287**

(43) Veröffentlichungstag der Anmeldung:
**26.06.2002 Patentblatt 2002/26**

(73) Patentinhaber:
• **Continental Teves AG & Co. oHG**
**60488 Frankfurt am Main (DE)**
• **Continental Aktiengesellschaft**
**30165 Hannover (DE)**

(72) Erfinder:
• **BLECKMANN, Hans**
**61231 Bad Nauheim (DE)**
• **GOSLAR, Marius**
**38106 Braunschweig (DE)**

(56) Entgegenhaltungen:
EP-A- 0 626 562      DE-A- 4 033 740
DE-A- 4 434 180      DE-A- 4 435 160
GB-A- 1 590 620      US-A- 4 618 940

**Beschreibung**

Die Erfindung betrifft einen Reifensensor, insbesondere Reifen-Seitenwandtorsions-Sensor=SWT-Sensor), mit mindestens zwei mit Abstand zur Reifenrotationsachse am Chassis angebrachten Meßwertaufnehmern, die mit mindestens einem auf oder in der Reifenwandung angebrachten oder mit mindestens einem auf oder in der Reifenwandung angebrachten und einem herkömmlichen, Pole aufweisenden Encoder zusammenwirken und die Ausgangssignale oder Ausgangsinformationen der Meßwertaufnehmer dem Kfz.-Regelungssystem zugeführt werden.

Es ist eine Vielzahl von Verfahren und Vorrichtungen zur Regelung des Fahrverhaltens eines Fahrzeugs bekannt, die Reifensensoren zur Erfassung der an den Reifen angreifenden Kräfte und Momente verwenden. Reifensensoren (SWT-Sensoren) bestehen aus einem im oder am Reifen angebrachten Encoder und mindestens einem dem Encoder zugeordneten, stationär am Chassis angeordneten Meßwertaufnehmer. Während in der EP 04 441 09 B1 die Deformation des Reifenprofilbereichs des Reifens - der Reifenlatsch - überwacht wird, offenbart die WO 96/10505 die Überwachung der Deformation der Seitenwand - die Torsionsdeformationen - eines Reifens über eine Zeitspannenmessung zwischen dem Passieren mindestens zweier auf unterschiedlichem Radius zur Rotationsachse angeordneter Marken am rotierenden Rad. Durch Auswertung der so erhaltenen Signale wird auf die am Reifen wirkenden Längskräfte geschlossen. Darüber hinaus können aus Änderungen der Amplituden des vom Meßwertaufnehmer erfassten Signals, das Abstandsänderungen zwischen dem Meßwertaufnehmer und dem Encoder wiedergibt, die Querkräfte ermittelt werden. Ein Reifensensor, der bei einer Verformung des Reifens infolge der an dem Reifen angreifenden Kräfte eine Änderung der Phasenlage zwischen von Meßwertaufnehmern abgegebenen Ausgangssignalen erfaßt, ist in der WO 97/44673 beschrieben.
Weiterhin ist aus der WO 99/19192 ein Verfahren bekannt, das auf der Basis der auf die einzelnen Räder wirkenden Kräfte, die mit Reifensensoren erfaßt werden, Fahrzeugzustandsgrößen bestimmt, die in Bezug auf Genauigkeit und Zuverlässigkeit die hohen Anforderungen von Kraftfahrzeug-Regelungssystemen erfüllen.

Der Erfindung liegt die Aufgabe zugrunde, die von dem Reifensensor zur Verfügung gestellten Signale bereinigt von auf Einflußgrößen beruhenden Fehlern einer Auswertung bzw. dem Kraftfahrzeug-Regelungssystem zuzuführen.

Diese Aufgabe wird erfindungsgemäß mit einem Reifensensor gemäß Anspruch 1 gelöst.

Der erfindungsgemäße Reifensensor und eine darauf aufbauende Regelung geht also von den direkt am Reifen auftretenden Kräften aus. Dadurch werden alle Einflußgrößen erfasst und Fehlinterpretationen, die auf mehrdeutige Signale oder Verarbeitungsfehler zurückgehen, bei der Ermittlung von Fahrzeugzustandsgrößen bzw. das Fahrverhalten beschreibenden Größen erschwert. Durch die Kalibrierung der von dem oder den Meßwertaufnehmern zur Verfügung gestellten, im wesentlichen sinusförmigen Signale mit bezug auf deren elektrischen Kenngröße wird eine den jeweiligen elektrischen Kenngrößen zugrundeliegende Fehlergröße, die durch unterschiedliche Einflußgrößen verursacht wird, berücksichtigt.
Die vorgesehene Signalaufbereitung und/oder -verarbeitung reduziert die Datenmenge mehrerer miteinander verknüpfter analoger Eingangssignale dabei in einer vorteilhaften Weise so, daß eine Weiterverarbeitung der gewonnenen Informationen mit geringerem Aufwand in der digitalen Signalverarbeitung gewährleistet ist. Dabei werden aus den Veränderungen der Amplitude, der Periodendauer und des Phasenbezuges der Eingangssignale die Informationen gewonnen, die eine Berechnung der auf die Reifen wirkenden Quer- und Längskräfte möglich machen. Die Signalaufbereitungs- und/oder -verarbeitung enthält dabei Mittel, um die unerwünschten Fehlergrößen zu erkennen und dann während der nachfolgenden Datenverarbeitung rechnerisch auszugleichen.

Nach einem vorteilhaften Ausführungsbeispiel nach der Erfindung werden in der digitalen Signalaufbereitung und/oder -verarbeitung der amplitudenbezogene Fehler mit einer multiplikativen Kalibrierung und der phasenbezogene Fehler mit einer additiven Kalibrierung kompensiert. Dabei werden erfindungsgemäß in der analogen Signalaufbereitung das amplitudenbezogene Ausgangssignal gleichgerichtet und die Höchstwerte (Amplituden) bestimmt, in der digitalen Signalaufbereitung und/oder -verarbeitung die Versetzung (Offset) über eine vorzeichenrichtige Mittelwertbildung der Höchstwerte bestimmt und ein Multiplikator $f$ aus dem Höchswert dividiert durch den Mittelwert des gleichgerichteten Signals gebildet und jedem Ausgangssignal bzw. jedem Pol des Encoders zugeordnet. Dem phasenbezogenen Ausgangssignal des Reifensensors ist erfindungsgemäß ein der Anzahl der Pole entsprechendes ideales Polmuster, das vorzugsweise äquidistante Pole aufweist, zugeordnet, wobei in der digitalen Signalaufbereitung und/oder -verarbeitung das ideale Polmuster mit jedem Pol des Encoders des phasenbezogenen Ausgangssignals verglichen wird. In Abhängigkeit von dem Vergleich werden dann erfindungsgemäß Korrekturfaktoren gebildet bzw. aktualisiert, die dem Ausgangssignal additiv zugeordnet werden.

Die Erfindung geht also von der Erkenntnis aus, daß der Korrektur des Amplitudenfehlers die Annahme zugrunde gelegt werden kann, daß es sich um einen multiplikativen Fehler handelt, da additive Luftspaltänderungen (Fehler:Δ)bzw. Reifenseitenwandungleichheiten vorausgesetzt werden, die über die exponentielle Kennlinie |*Amplitude-Offset*| = $A$*exp($B$ * *Luftspalt*) zu einer multiplikativen Amplitudenänderung werden:

$$\left|Amplitude - Offset\right| = A * \exp(B * (Luftspalt + \Delta))$$

$$\left|Amplitude - Offset\right| = A * \exp(B * Luftspalt + \Delta')$$

$$\left|Amplitude - Offset\right| = A * \exp(B * Luftspalt) * \exp(\Delta')$$

$$\left|Amplitude - Offset\right| = A * \exp(B * Luftspalt) * \Delta''$$

und eine multiplikative Ungleichheit des magnetischen Feldes vorausgesetzt wird, das direkt proportional zur Amplitude ist und dadurch eine multiplikative Ungleichheit der Amplitude erzeugt.

Der Korrektur des Polteilungsfehlers liegt dagegen die Annahme zugrunde, daß der Polteilungsfehler ein additiver Fehler ist, da er ein Winkelfehler ist, der sich über den Umfang des Encoders 17 additiv verändert.

Vorteilhaft werden zur Fehlerkorrektur die Amplituden und Phasendifferenzen in einem Ringspeicher entsprechend der Polnummer, wie 1, 2,....bis 96, abgelegt.

Durch die erfindungsgemäße Kalibrierung werden radperiodische Fehler sofort korrigiert, ohne daß eine zeitaufwendige (Verzögerungszeit) Filterung vorgenommen werden muß. Untersuchungen haben ergeben, daß durch die Kalibrierung die Genauigkeit der Signalauswertung um bis zu 7% gesteigert werden kann.

Ein Ausführungsbeispiel der Erfindung ist in der Zeichnung dargestellt und wird im folgenden näher beschrieben.

Es zeigen

Fig.1    ein schematisches Schaltbild der SWT-Signalaufbereitung und -verarbeitung

Fig.2    eine schematische Darstellung der Ursachen des Amplitudenfehlers

Fig.3    eine Kennline der Abhängigkeit des Betrages der Ausgangssignal-Amplitude vom Luftspalt

Fig.4    eine Darstellung vom Amplitudenfehler durch einen Offset(Gleichanteil) und durch Ungleichförmigkeit

Fig.5    eine Darstellung des Fehlers in der Phasendifferenz

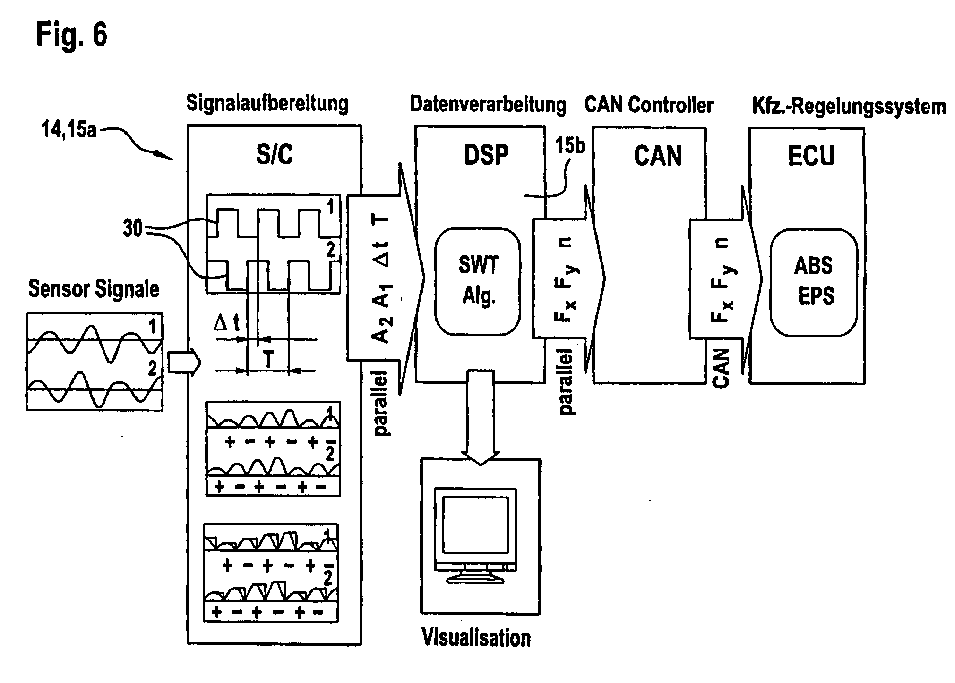

Fig.6    den Signalfluß zwischen der Signalaufbereitung und - verarbeitung sowie dem Kraftfahrzeug-Regelungssystem

Fig.7    das Prinzip der Kompensation von Offset- und Ungleichförmigkeitsfehlern

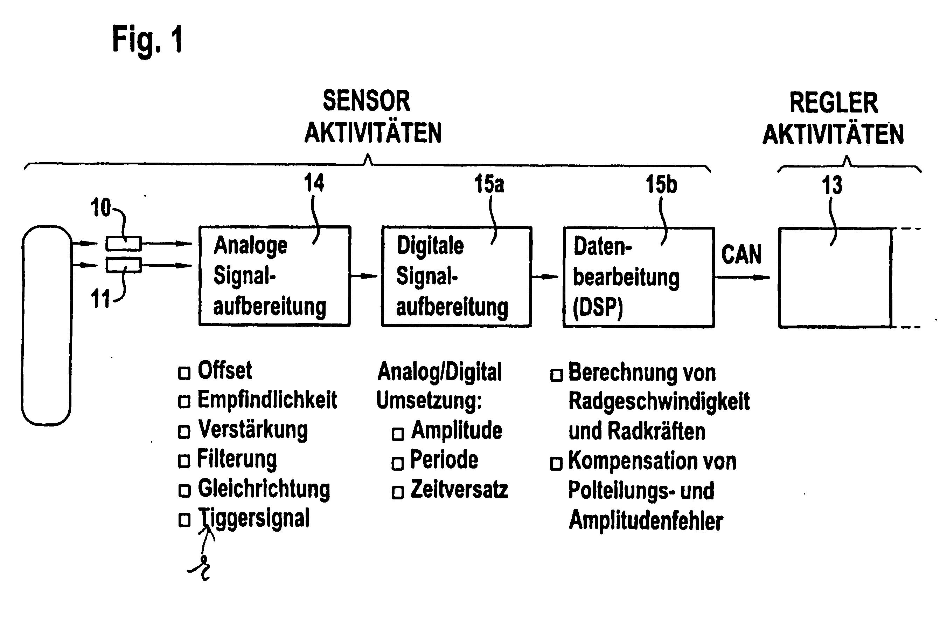

Die in Figur 1 dargestellte Schaltung weist die folgenden Funktionsgruppen auf:

- Analoge Signalaufbereitung 14
- Digitale Signalaufbereitung 15a
- Digitale Signal- bzw. Datenverarbeitung 15b (DSP=Digitaler Signalprozessor)
- CAN Schnittstelle zur Anbindung an das Kfz-Regelungssystem 13

In der analogen Signalaufbereitung werden die sinusförmigen Ausgangsstromsignale der SWT-Meßwertaufnehmer 10, 11 in eine Spannung überführt und in ein Rechtecksignal gewandelt, gefiltert, an Veränderungen des Signaloffsets der Sensoren anpaßt und der Spitzenwert jeder Halbwelle erfaßt.

In der digitalen Signalaufbereitung 15a erfolgt eine Umsetzung der analogen Signale in digitale Signale bzgl. der Amplitude, der Periode und des Zeitversatzes.

In der digitalen Signal- bzw. Datenverarbeitung 15b erfolgt die Ermittlung der Radgeschwindigkeit und der Radkräfte. Darüber hinaus werden die Polteilungs - und Amplitudenfehler kompensiert.

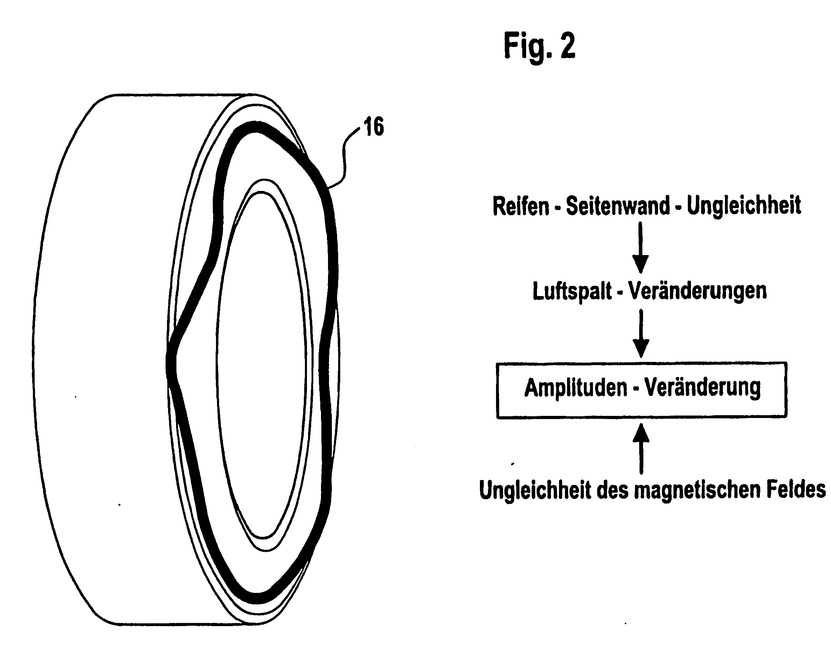

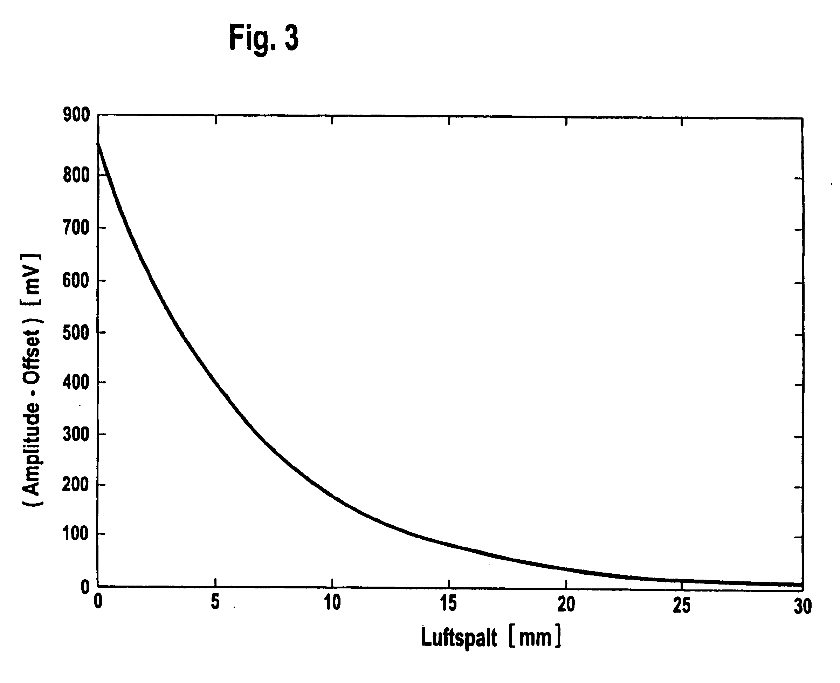

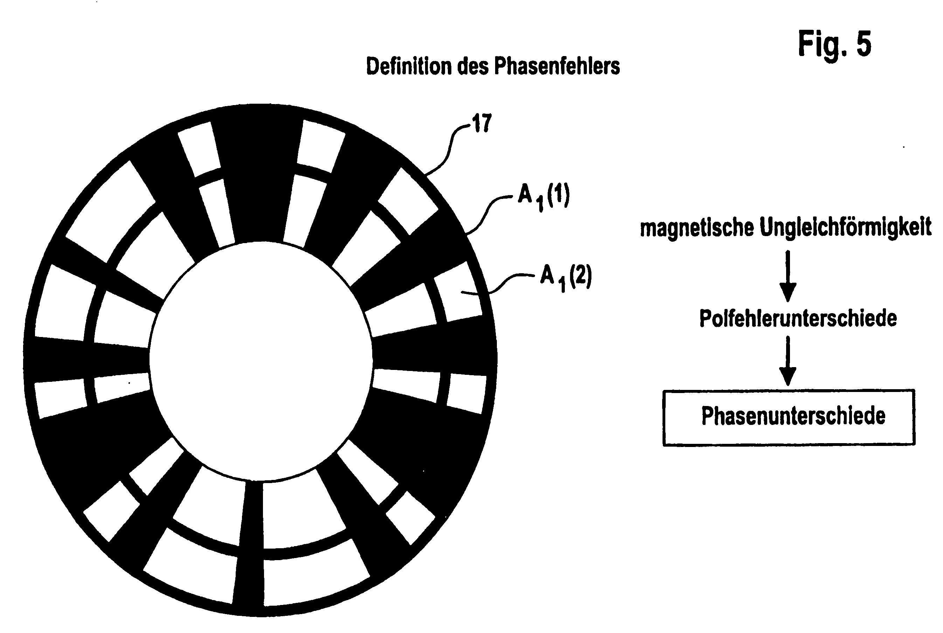

Die Amplitudenfehler beruhen auf einer Ungleichförmigkeit der Reifen in lateraler Richtung. Figur 2 zeigt die Reifen-Seitenwand-Ungleichförmigkeit schematisch als gewellte Linie 16. Die Reifen-Seitenwand-Ungleichförmigkeit führt zu Veränderungen des Luftspalts zwischen den stationär am Chassis im Abstand zur Rotationsachse des Rades bzw. des Reifens befestigten Meßwertaufnehmern(Sensoren) 10 bzw. 11 und dem in der Reifenseitenwand angeordneten Encoder 17 (Figur 5), die nicht unter der Einwirkung von Kräften auf den Reifen erfolgt. Es ergibt sich vielmehr eine radperiodische Abstandsänderung, die mit der durch die analoge Signalaufbereitung 14 erfaßten Amplitude zusammenhängt. Der Zusammenhang zwischen der Amplitude und dem Luftspalt oder Abstand zwischen den Meßwertaufnehmern 10, 11 und dem Encoder 17 ist in Figur 3 dargestellt, wobei auf der Abszisse der Luftspalt in Millimeter(mm) und auf der Ordinate die Amplitude in Milli Volt (mV) bereinigt um einen Gleichanteil(Offset bzw. Versatz) aufgetragen ist. Eine weiterer Amplitudenfehler beruht auf der Ungleichförmigkeit der Magnetisierung der Reifenseitenwand über den Umfang der Seitenwand, so daß sich durch die in Figur 2 aufgeführte Ungleichheit des magnetischen Feldes bzw. der Änderung der magnetischen Feldstärke eine zusätzliche radperiodische Änderung der Amplitude ergibt.

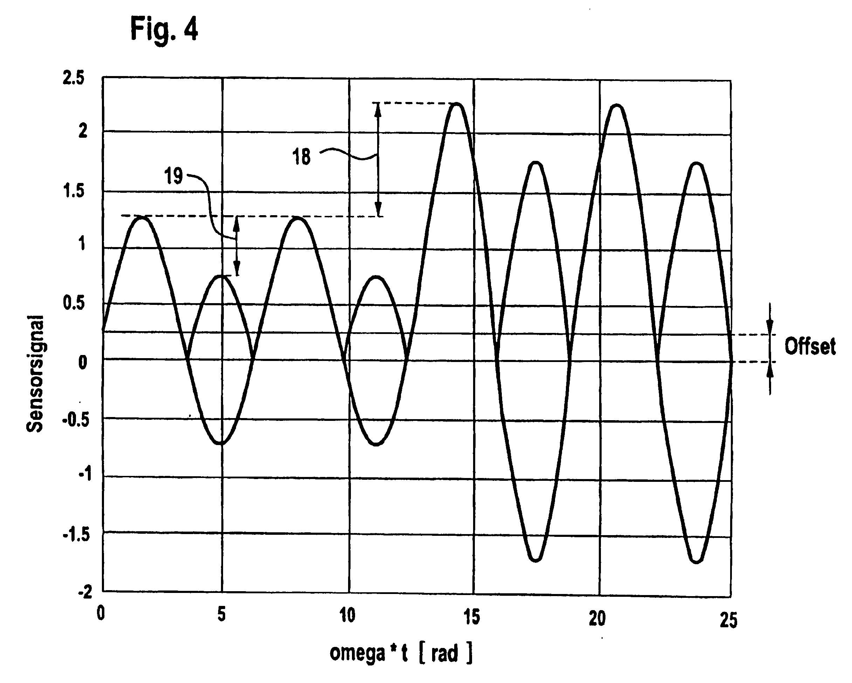

Ferner kann ein Amplitudenfehler daraus entstehen, daß das Ausgangssignal einen Wechsel- und einen Gleichanteil 19(Offset) enthält, der in der analogen Signalaufbereitung 14 herausgefiltert wird. Aus dem verbleibenden Wechselanteil wird die Amplitude durch Gleichrichtung mit anschließender Maximalwertbestimmung gewonnen. Dabei ist es möglich, daß der Offset stationär unzureichend oder zeitverzögert ermittelt wird. Dann sind die Maximalwerte der Halbwellen (Amplituden)durch den Ungleichförmigkeits-Anteil 18 (Figur 4) unterschiedlich.

Phasenfehler entstehen durch eine Abweichung der aufgebrachten Magnetisierung vom idealen Polmuster, dem eine gleichmäßige (äquidistante) Verteilung der Pole des Encoders 17 über dem Umfang der Reifenseitenwand zugrunde liegt. Dies gilt für Baugruppen die einen Reifensensor und einen herkömmlichen Sensor oder zwei Reifensensoren mit zwei Meßwertaufnehmern 10. 11 aufweisen.

Die Fehler des Ausgangssignals der Meßwertaufnehmer 10, 11 werden wie folgt korrigiert:

Die Kalibrierung bzw. Initialisierung der Fehlerkorrektur erfolgt bei stationärem Fahrverhalten. Das stationäre Fahrverhalten wird mit Hilfe von Eingangsgrößen festgestellt, die von herkömmlichen Sensoren bereitgestellt werden und beispielsweise die Quer- und Längsbeschleunigungsänderung und die Gierbeschleunigung umfassen. Geeigneterweise wirken zu diesem Zeitpunkt keine oder nur sehr kleine Kraftänderungen auf das Rad bzw. den Reifen. Dabei können folgende Bedingungen einem stationären Fahrverhalten zugrunde gelegt sein:

$$|\text{Quer - und Längsbeschleunigungsänderung}| < 0,05g/s$$

$$|\text{Gierbeschleunigung}| < 5 \text{Grad}/s^2$$

Wenn die Bedingungen erfüllt sind, darf die Kalibrierung des Ausgangssignals durchgeführt werden.

In einem Ringspeicher der digitalen Signalaufbereitung 15a werden die Amplituden $A_1$, $A_2$ und die Pasendifferenz $\Delta\varphi$ bei stationärem Fahrverhalten gemäß folgender Tabelle gespeichert:

| Pol Nummer | 1 | 2 | 3 | .. | 96 |
|---|---|---|---|---|---|
| $A_1$ | $A_1(1)$ | $A_1(2)$ | $A_1(3)$ | .. | $A_1(96)$ |
| $A_2$ | $A_2(1)$ | $A_2(2)$ | $A_2(3)$ | .. | $A_2(96)$ |
| $\Delta\varphi$ | $\Delta\varphi(1)$ | $\Delta\varphi(2)$ | $\Delta\varphi(3)$ | .. | $\Delta\varphi(96)$ |

Der Encoder 17 weist nach der bevorzugten Ausbildung 48 Polpaare, also 96 Pole auf. Dabei erfolgt in dem Ringspeicher die Zuordnung des polspezifischen Fehlers zu dem jeweiligen Pol des Encoders 17. Diese Zuordnung des polspezifischen Fehlers zum zugehörigen Pol wird bei einem Richtungswechsel des Fahrzeugs über eine Synchronisation des Korrekturmusters zum aktuellen Polmuster beibehalten. Encoder 17 mit einer anderen Polzahl können selbstverständlich entsprechend dem Ausführungsbeispiel verwendet werden.

Als Phasendifferenz gilt der Phasenunterschied zwischen dem näher zur Rotationsachse des Rades bzw. des Reifens angeordneten unteren Meßwertaufnehmer 10 oder eines herkömmlichen Sensors und dem entfernter von der Rotationsachse des Rades oder Reifens angeordneten oberen Meßwertaufnehmer 11. Zur Kompensation des Phasenfehlers wir der Mittelwert der Phasendifferenzen über eine Radumdrehung nach der folgenden Beziehung gebildet:

$$\Delta\varphi_{mittel} = \frac{\sum \Delta\varphi(i)}{96} \qquad\qquad i = 1......96$$

Hierzu wird der aktuelle Ringspeicher in einen zweiten Ringspeicher mit der Bezeichnung $\Delta\varphi''$ kopiert:

**Zweiter Ringspeicher**

| $\Delta\varphi_0$ | $\Delta\varphi_0(1)$ | $\Delta\varphi_0(2)$ | $\Delta\varphi_0(3)$ | .. | $\Delta\varphi_0(96)$ |
|---|---|---|---|---|---|

$\downarrow$

**Der zweite Ringspeicher wird auf den Mittelwert bezogen:**

**Zweiter Ringspeicher**

| $\Delta\varphi_A$ | $\Delta\varphi_0(1) -$ $\Delta\varphi_{mittel}$ | $\Delta\varphi_0(2) -$ $\Delta\varphi_{mittel}$ | $\Delta\varphi_0(3) -$ $\Delta\varphi_{mittel}$ | .. | $\Delta\varphi_0(96) -$ $\Delta\varphi_{mittel}$ |
|---|---|---|---|---|---|

Der additive Phasenfehler ist dann in dem zweiten Ringspeicher nach folgender Beziehung enthalten bzw. ersetzt den Ringspeicher $\Delta\varphi_0$, der dann den Mittelwert der Phasendifferenz während einer Radumdrehung enthält:

$$\Delta\varphi_A = \Delta\varphi_0 - \Delta\varphi_{mittel}$$

mit $\Delta\varphi_A$ = additiver Phasenfehler, $\Delta\varphi_0$ = Werte im 2ten Ringspeicher

In folgenden Korrekturzyklen erfolgt die Fehlerkorrektur des Phasenfehlers durch eine Modifikation der Phasendifferenzen ($\Delta\varphi^*$), die für die weiteren Berechnungen verwendet werden nach der folgenden Beziehung:

$$\Delta\varphi^*(i) = \Delta\varphi(i) - \Delta\varphi_A(i) = \Delta\varphi(i) - \Delta\varphi_0(i) + \Delta\varphi_{mittel} \qquad i=1....96$$

Der Korrektur des Amplitudenfehlers bei stationärem Fahrverhalten liegt die Bedingung zugrunde, daß das Vorzeichen in der Amplitudeninformation berücksichtigt ist und daß ungerade Polnummern zu der positiven Halbwelle gehören ($A(2*i+1)>0$, $i=0...48$) und die geraden Polnummern zu den negativen Halbwellen gehören($A(2*i)<0$, $i=0...48$). Die Kompensation des Amplitudenfehlers erfolgt in drei Schritten:

1. Ermitteln des Fehlers des Gleichanteils(Offsets)
2. Ermitteln des Fehlers des Ungleichförmigkeitsanteils
3. Kompensation des der Fehler

Es wird im folgenden nur die Kompensation des Amplitudenfehlers der Amplitude $A_1$ beschrieben. Bei der Amplitude $A_2$ ist entsprechend zu verfahren.

Der aktuelle Ringspeicher $A_1$ wird in einen zweiten Ringspeicher mit der Bezeichnung $A_{(0)}$ kopiert:

Zweiter Ringspeicher

| $A_{(0)1}$ | $A_{(0)1}(1)$ | $A_{(0)1}(2)$ | $A_{(0)1}(3)$ | .. | $A_{(0)1}(96)$ |
|---|---|---|---|---|---|

Da die Amplitude das richtige Vorzeichen enthält, kann der Gleichanteil einer Periode durch die Summation zweier aufeinanderfolgender Amplituden A(2*i+1) und A(2*i+2) oder der Differenz zweier aufeinanderfolgender Amplituden |A(2*i +1) |und| A(2*i +2| ermittelt werden. Der Gleichanteil $A_{Offset}$ über den gesamten Reifenumfang kann dann nach der folgenden Beziehung bestimmt werden:

$$A_{Offset} = \frac{\sum A_0(i)}{96} \qquad i = 1 \ldots 96$$

Der zweite Ringspeicher $A_0$ wird nun durch den Ringspeicher $a_0$ ersetzt, der den offsettkompensierten Betrag der Amplitude nach der folgenden Beziehung enthält:

$$a_0(i) = \left| A_0(i) - A_{Offset} \right| \qquad i = 1 \ldots 96$$

Zweiter Ringspeicher

| $a_{(0)1}$ | $a_{(0)1}(1) - A_{Offset}$ | $a_{(0)1}(2) - A_{Offset}$ | $a_{(0)1}(3) - A_{Offset}$ | .. | $a_{(0)1}(96) - A_{Offset}$ |
|---|---|---|---|---|---|

Bei der Ermittlung des Amplitudenfehlers aufgrund der Ungleichförmigkeit der Reifenseitenwand 16 und der Magnetisierung (unterschiedliche Feldstärke) des Encoders 17 wird eine multiplikative Veränderung der Berechnung zugrunde gelegt. Es wird der Mittelwert der Ungleichförmigkeit über eine Radumdrehung nach der folgenden Beziehung gebildet:

$$a_{mittel} = \frac{\sum a_0(i)}{96} \qquad . \qquad i = 1 \ldots 96$$

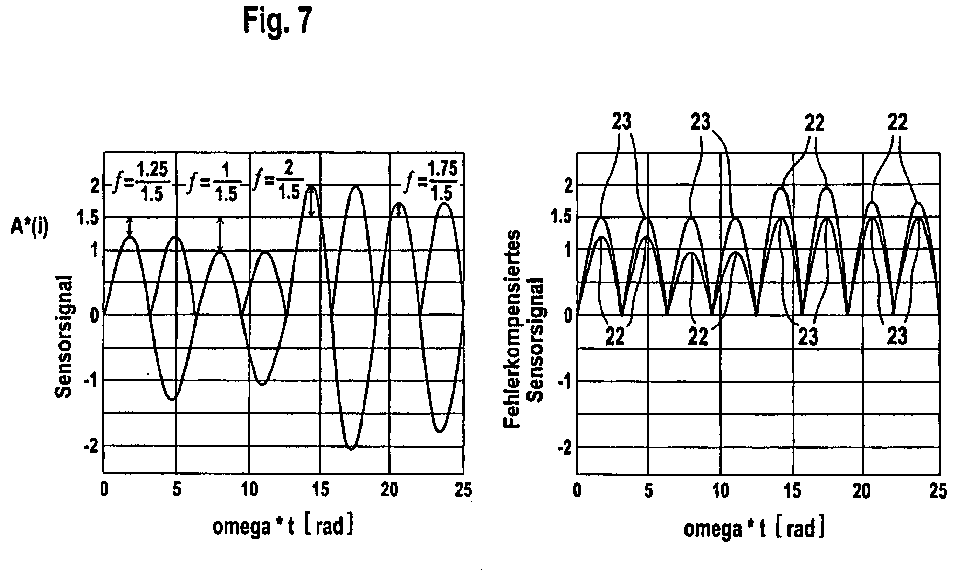

Aus der Differenz des offsettkompensierten Betrags und dem Mittelwert wird der multiplikative Fehler nach der folgenden, in Figur 7 dargestellten Beziehung gebildet:

$$f(i) = \frac{a_0}{a_{mittel}} = \frac{\left| A_0(i) - A_{Offset} \right|}{a_{mittel}} \qquad i = 1 \ldots 96$$

Der zweite Ringspeicher $a_0$ wird durch den multiplikativen Fehler $f(i)$ ersetzt bzw. der multiplikative Fehler wird in den zweiten Ringspeicher kopiert.

| f | $f_1(1)$ | $f_1(2)$ | $f_1(3)$ | .. | $f_1(96)$ |
|---|---|---|---|---|---|

Die fehlerbehafteten Amplituden A(i) werden dann entsprechend der Darstellung in Figur 7 durch den Betrag der vom Offset- und Ungleichförmigkeitsfehler bereinigten Amplituden A*(i) nach der folgenden Beziehung ersetzt:

$$A^{\cdot}(i) = \frac{\left| A(i) - A_{Offset} \right|}{f(i)} \qquad \mathtt{i=1...96}$$

In Figur 7, rechtes Diagramm, ist auf der Ordinate das fehlerkompensierte Ausgangssignal und auf der Abszisse die Winkelfrequenz über der Zeit dargestellt. Die offsetkorrigierten Ausgangssignale sind dabei mit 22 und die von Offset- und Ungleichförmigkeitsfehlern bereinigten Signale mit 23 bezeichnet.

Nach einem vorteilhaften Ausführungsbeispiel wird eine Langzeit-Filterung der Korrekturterme vorgesehen. Durch die Filterung mittels eines Tiefpassfilters werden zufällige Störungen und Einflüsse minimiert. Die Korrektur mit einem diskreten Tiefpass erfolgt nach der folgenden Beziehung:

f(k)=1/(1+FC)*(FC*f (k-1)+u(k), wobei

f(k)=gefilterter Wert von f zum Zeitpunkt $t_k$, f (k-1)=gefilterter Wert von f zum Zeitpunkt $t_{k-1}$, u (k)=Wert von f zum Zeitpunkt $t_k$ und FC =Filterkonstante (FC >0).

Nach einem weiteren Ausführungsbeispiel wird der multiplikative Fehlerterm so geändert, daß eine Normierung der Amplitude eingeführt wird. Der Mittelwert $a_{mittel}$ wird hierbei gleich 1 gesetzt, so daß

$$f(i) = \frac{a_0}{1} = \left| A_0(i) - A_{Offset} \right| \qquad \mathtt{i=1...96}$$

ist.

Entsprechend kann eine Normierung der Phasendifferenz dadurch vorteilhaft erreicht werden, indem der Mittelwert $\Delta\varphi_{mittel} = 0$ gesetzt wird, so daß

$$\Delta\varphi_A = \Delta\varphi_0 - \Delta\varphi_{mittel} \qquad\qquad \Delta\varphi_{mittel} = 0$$

$$\Delta\varphi_A = \Delta\varphi_0$$

ist.

Die Normierung der Amplitude und der Phasendifferenz erfolgt vorzugsweise bei stationärem Fahrverhalten unter den folgenden Bedingungen:

|Querbeschleunigung|< 0, 07g
|Längsbeschleunigung|< 0,1g
|Lenkwinkel|< 1°
|Lenkwinkelgeschwindigkeit|< 20 [Grad/s]
Vorwärtsfahrt

Gangabhängige Geschwindigkeit

1.Gang<10 km/h
2.Gang<30 km/h
3.Gang<50 km/h
4.Gang<100 km/h
5.Gang<150 km/h

Wenn diese Bedingungen erfüllt und ca. 70 ms stabil sind, liegt ein stationäres, längs- bzw. querkraftfreies Fahrverhalten vor.

**Patentansprüche**

1. Reifensensor, insbesondere Reifen-Seitenwandtorsions-Sensor, mit mindestens zwei mit Abstand zur Reifenrotationsachse am Chassis angebrachten Meßwertaufnehmern (10, 11), die mit mindestens einem auf oder in der Reifenwandung angebrachten oder mit mindestens einem auf oder in der Reifenwandung angebrachten und einem herkömmlichen, Pole aufweisenden Encoder (17) zusammenwirken und die Ausgangssignale oder Ausgangsinformationen der Meßwertaufnehmer (10, 11) dem Kfz.- Regelungssystem (13) zugeführt werden, **dadurch gekennzeichnet,**
   **daß** zwischen dem Kfz.-Regelungssystem (13) und den Meßwertaufnehmern mindestens eine analoge (14) und mindestens eine digitale Signalaufbereitung (15a) und/oder -verarbeitung (15b) vorgesehen ist,
   **daß** die Meßwertaufnehmer (10, 11) mindestens zwei bzgl. einer Änderung der Phasenlage bewertbare Ausgangssignale und/oder mindestens ein bzgl. der Änderung der Amplitude bewertbares Ausgangssignal der digitalen ignalaufbereitung (15a) und/oder -verarbeitung (15b) zuführen, und
   **dass** die digitale Signalaufbereitung (15a) und/oder - Verarbeitung (15b) die systematischen Fehler der Ausgangssignale in Abhängigkeit davon, ob es ein amplitudenbezogener Fehler oder ein phasenbezogener Fehler ist, unterschiedlich kalibriert.

2. Reifensensor nach Anspruch 1, **dadurch gekennzeichnet; daß** in der digitalen Signalaufbereitung (15a) und/oder -verarbeitung (15b) der amplitudenbezogene Fehler mit einer multiplikativen Kalibrierung und der phasenbezogene Fehler mit einer additiven Kalibrierung kompensiert werden.

3. Reifensensor nach Anspruch 1 oder 2, **dadurch gekennzeichnet, daß** die Ausgangssignale in der analogen Signalaufbereitung (14) im wesentlichen sinusförmig ausgebildet sind.

4. Reifensensor nach einem der Ansprüche 1 bis 3, **dadurch gekennzeichnet, daß** das amplitudenbezogene Ausgangssignal in der analogen Signalaufbereitung (14) gleichgerichtet und die Höchstwerte (Amplituden) bestimmt werden, daß in der digitalen Signalaufbereitung (15a) oder -verarbeitung (15b) die Versetzung (Offset) über eine vorzeichenrichtige Mittelwertbildung der Höchstwerte bestimmt wird und daß ein Multiplikator f aus dem Höchwert dividiert durch den Mittelwert des gleichgerichteten Signals gebildet und jedem Ausgangssignal bzw. jedem Pol des Encoders (17) zugeordnet wird.

5. Reifensensor nach einem der Ansprüche 1 bis 4, **dadurch gekennzeichnet, daß** dem phasenbezogenen Ausgangssignal des Reifensensors ein der Anzahl der Pole entsprechendes ideales Polmuster zugeordnet ist, daß in der digitalen Signalaufbereitung (15a) und/oder -verarbeitung (15b) das ideale Polmuster mit jedem Pol des Encoders (17) des phasenbezogenen Ausgangssignals verglichen wird und daß in Abhängigkeit von dem Vergleich Korrekturfaktoren gebildet bzw. aktualisiert werden, die dem Ausgangssignal additiv zugeordnet werden.

6. Reifensensor nach einem der Ansprüche 1 bis 5, **dadurch gekennzeichnet, daß** das ideale Polmuster äquidistante Pole aufweist.

7. Reifensensor nach einem der Ansprüche 1 bis 6, **dadurch gekennzeichnet, daß** die Korrekturfaktoren in einem Speicher der digitalen Signalaufbereitung (15a) und/oder -verarbeitung (15b) abgelegt sind.

8. Reifensensor nach einem der Ansprüche 1 bis 7, **dadurch gekennzeichnet, daß** die Kalibrierung der amplitudenbezogenen Fehler oder phasenbezogenen Fehler bei stationärem Fahrverhalten erfolgt.

**Claims**

1. Tire sensor, especially tire sidewall torsion sensor, including at least two pick-ups (10, 11) for measuring data being mounted on the chassis at a distance from the tire rotational axis, the said pick-ups for measuring data cooperating with at least one encoder mounted on or in the tire wall, or with at least one encoder mounted on or in the tire wall and one conventional encoder (17) exhibiting poles, and the output signals or output information of such pick-ups for measuring data (10, 11) are transmitted to the motor vehicle control system (13),
   **characterized in that** at least one analog (14) and at least one digital signal-conditioning unit (15a) and/or signal-processing unit (15b) are provided between the motor vehicle control system (13) and the pick-ups for measuring data,
   **in that** the pick-ups (10, 11) for measuring data send at least two output signals that can be evaluated with respect to a change in the phase position and/or at least one output signal that can be evaluated with respect to the change of the amplitude to the digital signal-conditioning unit (15a) and/or signal-processing unit (15b), and

**in that** the digital signal-conditioning unit (15a) and/or signal-processing unit (15b) calibrates the systematic errors of the output signals differently depending on whether the error is an amplitude-related error or a phase-related error.

2. Tire sensor as claimed in claim 1,
**characterized in that** the amplitude-related error is compensated by a multiplicative calibration and the phase-related error is compensated by an additive calibration in the digital signal-conditioning unit(15a) and/or signal-processing unit (15b).

3. Tire sensor as claimed in claim 1 or 2,
**characterized in that** the output signals in the analog signal-conditioning unit (14) are generally of a sinusoidal configuration.

4. Tire sensor as claimed in any one of claims 1 to 3,
**characterized in that** the amplitude-related output signal is rectified in the analog signal-conditioning unit (14) and the maximum values (amplitudes) are determined, **in that** in the digital signal-conditioning unit (15a) or signal-processing unit (15b), the offset is determined by way of averaging the maximum values with correct signs, and **in that** a multiplier f is formed of the maximum value divided by the mean value of the rectified signal and is assigned to each output signal or each pole of the encoder (17), respectively.

5. Tire sensor as claimed in any one of claims 1 to 4,
**characterized in that** an ideal pole pattern which corresponds to the number of poles is associated with the phase-related output signal of the tire sensor,
**in that** in the digital signal-conditioning unit (15a) and/or signal-processing unit (15b), the ideal pole pattern is compared with each pole of the encoder (17) of the phase-related output signal, and **in that**, depending on the comparison, correction factors are produced or updated which are associated additively with the output signal.

6. Tire sensor as claimed in any one of claims 1 to 5,
**characterized in that** the ideal pole pattern has equidistant poles.

7. Tire sensor as claimed in any one of claims 1 to 6,
**characterized in that** the correction factors are stored in a memory of the digital signal-conditioning unit (15a) and/or signal-processing unit (15b).

8. Tire sensor as claimed in any one of claims 1 to 7,
**characterized in that** the calibration of the amplitude-related errors or phase-related errors is effected during stationary driving behaviour.

**Revendications**

1. Capteur de pneu, en particulier capteur de torsion de la paroi latérale d'un pneu, comportant au moins deux capteurs de valeurs de mesure (10, 11) placés sur le châssis à distance de l'axe de rotation du pneu, qui coopèrent avec au moins un codeur (17) placé sur ou dans la paroi du pneu ou avec au moins un codeur (17) placé sur ou dans la paroi des pneus et un codeur (17) classique comportant des pôles, et les signaux de sortie ou informations de sortie des capteurs de valeurs de mesure (10, 11) sont amenées au système de régulation (13) du véhicule, **caractérisé en ce que**
entre le système de régulation (13) du véhicule et les capteurs de valeurs de mesure il est prévu au moins un dispositif analogique (14) de génération et/ou de traitement de signaux et au moins un dispositif numérique de génération (15a) et/ou de traitement de signaux (15b),
**en ce que** les capteurs de valeurs de mesure (10, 11) amènent au moins deux signaux de sortie dont une variation de phase est apte à être évaluée et/ou au moins un signal de sortie dont une variation d'amplitude est apte à être évaluée, au dispositif numérique de génération des signaux (15a) et/ou de traitement des signaux (15b), et
**en ce que** le dispositif numérique de génération des signaux (15a) et/ou de traitement des signaux (15b) étalonne différemment les défauts systématiques des signaux de sortie suivant qu'il s'agit d'un défaut d'amplitude ou d'un défaut de phase.

2. Capteur de pneu selon la revendication 1, **caractérisé en ce que** dans le dispositif numérique de génération des signaux (15a) et/ou de traitement des signaux (15b), le défaut d'amplitude est compensé par un étalonnage de multiplication et le défaut de phase par un étalonnage d'addition.

3. Capteur de pneu selon la revendication 1 ou 2,
**caractérisé en ce que** les signaux de sortie sont essentiellement de forme sinusoïdale dans le dispositif analogique (14) de génération des signaux.

4. Capteur de pneu selon l'une des revendications 1 à 3, **caractérisé en ce que** le signal de sortie relatif à l'amplitude est redressé dans le dispositif analogique (14) de génération des signaux et les valeurs maximales (amplitudes) sont déterminées, **en ce que** dans le dispositif numérique de génération des signaux (15a) ou de traitement des signaux (15b), on détermine le décalage (offset) par la formation d'une moyenne de signes corrects des valeurs maximales, et **en ce qu'**on forme un multiplicateur f à partir de la valeur maximale divisée par la valeur moyenne du signal redressé, et on l'affecte à chaque signal de sortie ou à chaque pôle du codeur (17).

5. Capteur de pneu selon l'une des revendications 1 à 4, **caractérisé en ce qu'**au signal de sortie relatif à la phase du capteur de pneu est affecté un modèle de pôle idéal correspondant au nombre de pôles, **en ce que** dans le dispositif numérique de génération des signaux (15a) et/ou de traitement des signaux (15b), le modèle de pôle idéal est comparé à chaque pôle du codeur (17) du signal de sortie relatif à la phase, et **en ce qu'**en fonction de la comparaison des facteurs de correction sont formés ou actualisés, lesdits facteurs de correction étant affectés par addition au signal de sortie.

6. Capteur de pneu selon l'une des revendications 1 à 5, **caractérisé en ce que** le modèle de pôle idéal comporte des pôles équidistants.

7. Capteur de pneu selon l'une des revendications 1 à 6, **caractérisé en ce que** les facteurs de correction sont enregistrés dans une mémoire du dispositif numérique de génération des signaux (15a) et/ou de traitement des signaux (15b).

8. Capteur de pneu selon l'une des revendications 1 à 7, **caractérisé en ce que** l'étalonnage des défauts relatifs à l'amplitude ou des défauts relatifs à la phase s'effectue pour l'état de conduite stationnaire.

# Fig. 1

SENSOR
AKTIVITÄTEN

REGLER
AKTIVITÄTEN

| Analoge Signalaufbereitung (14) | Digitale Signalaufbereitung (15a) | Datenbearbeitung (DSP) (15b) | CAN → (13) |

□ Offset
□ Empfindlichkeit
□ Verstärkung
□ Filterung
□ Gleichrichtung
□ Tiggersignal

Analog/Digital
Umsetzung:
□ Amplitude
□ Periode
□ Zeitversatz

□ Berechnung von Radgeschwindigkeit und Radkräften
□ Kompensation von Polteilungs- und Amplitudenfehler

EP 1 216 177 B1

# Fig. 2

Reifen - Seitenwand - Ungleichheit

↓

Luftspalt - Veränderungen

↓

| Amplituden - Veränderung |

↑

Ungleichheit des magnetischen Feldes

Fig. 3

Fig. 4

EP 1 216 177 B1

## Fig. 5

**Definition des Phasenfehlers**

17

$A_1(1)$

$A_1(2)$

**magnetische Ungleichförmigkeit**

↓

**Polfehlerunterschiede**

↓

**Phasenunterschiede**

EP 1 216 177 B1

# Fig. 6

EP 1 216 177 B1

Fig. 7

EP 1 216 177 B1